# EUROPEAN PATENT APPLICATION

(11) **EP 4 760 500 A1**
(43) Date of publication of application: **17.06.2026**
(21) Application number: 25738504.7
(22) Date of filing: 09.01.2025
(51) Int. Cl.: G06F 9/451

(54) **FRAME COMPOSITION METHOD, ELECTRONIC DEVICE, AND COMPUTER-READABLE STORAGE MEDIUM**

(30) Priority: 10.01.2024 CN 202410042526
(71) Applicant: Honor Device Co., Ltd., Shenzhen, Guangdong 518040 (CN)
(72) Inventor: NING, Yong, Shenzhen, Guangdong 518040 (CN)
(74) Representative: Epping - Hermann - Fischer
(86) International application number: PCT/CN2025/071510
(87) International publication number: WO 2025/148975

(57) **Abstract**

A frame composition method, an electronic device, and a computer-readable storage medium relate to the field of terminals. In the method, during switching of the electronic device from displaying a first user interface to displaying a second user interface, in a process of compositing M first layers of a first frame, if attributes of the first layers meet at least one of a plurality of preset attribute items, composition prediction is performed on the first frame, M being a positive integer. A probability of performing composition prediction on the frame can be increased, and a composition time of the first frame can be saved, thereby avoiding picture stuttering of the electronic device, and improving user experience.

## Description

This application claims priority to Chinese Patent Application No. 202410042526.X, filed with the China National Intellectual Property Administration on January 10, 2024 and entitled "FRAME COMPOSITION METHOD, ELECTRONIC DEVICE, AND COMPUTER-READABLE STORAGE MEDIUM", which is incorporated herein by reference in its entirety.

### TECHNICAL FIELD

This application relates to the field of terminals, and in particular, to a frame composition method, an electronic device, and a computer-readable storage medium.

### BACKGROUND

An electronic device may display a picture on a display screen to implement human-machine interaction with a user. In some scenarios, processing such as rotation, scaling, and blur effect needs to be performed on a layer, so that a GPU needs to be used for frame composition. Consequently, a composition time is long, which causes picture stuttering, and affects user experience.

### SUMMARY

This application provides a frame composition method, an electronic device, and a computer-readable storage medium. When M first layers in a first frame meet a first preset condition, the electronic device directly performs composition prediction on the first frame, which can increase a probability of performing composition prediction on the frame, and save a composition time of the first frame, thereby avoiding picture stuttering of the electronic device, and improving user experience.

**According to a first aspect,** this application provides a frame composition method. The method is applied to an electronic device, and includes: displaying, by a display screen of the electronic device, a first user interface; and performing, by the electronic device, composition prediction on a first frame during switching of the electronic device from displaying the first user interface to displaying a second user interface in a process of compositing M first layers of the first frame if attributes of the first layers meet at least one of a plurality of preset attribute items, M being a positive integer, where the plurality of preset attribute items include scaling.

In the frame composition method provided in this application, the display screen of the electronic device displays the first user interface, and the first frame is composited during switching of the electronic device from displaying the first user interface to displaying the second user interface. In a process in which the electronic device composites the M first layers of the first frame, if attributes of the first layers meet at least one of the plurality of preset attribute items (including a scaling effect), composition prediction is performed on the first frame. A probability of performing composition prediction on the first frame can be increased, and a composition time of the first frame can be saved, thereby avoiding picture stuttering of the electronic device, and improving user experience.

It may be understood that composition prediction refers to a method for asynchronous execution of a GPU compositing the M first layers and a hardware composer determining a composition manner requested by a layer in the first frame other than the M first layers. With this method, a process in which the electronic device determines a composition manner requested by another layer in the first frame does not affect GPU composition. Therefore, a computing power of the electronic device can be fully exerted to be used for GPU composition.

Optionally, when a composition manner requested by a layer in the first frame other than the M first layers is GPU composition, the electronic device performs GPU composition on the layer. Optionally, the first user interface and the second user interface may be in a screen-off state. Optionally, the rendering attribute being scaling indicates rendering of a scale-up effect or a scale-down effect for a target layer.

**In a possible implementation,** the first preset condition further includes: the plurality of preset attribute items include: rounded corner, blur effect, special angle rotation, high dynamic range HDR lighting composition, and shadow effect.

In the implementation provided in this application, the plurality of preset attribute items further include rounded corner, blur effect, special angle rotation, high dynamic range HDR lighting composition, and shadow effect. It may be learned from the foregoing that when the layer meets at least one of the plurality of preset attribute items, the electronic device may directly perform GPU composition on the layer. In an implementation of this application, more preset attribute items are shown. Therefore, a probability that a layer in the first frame meets at least one of the plurality of preset attribute items may be increased, so that the electronic device directly performs GPU composition on more layers.

**In a possible implementation,** the performing, by the electronic device, composition prediction on a first frame includes: performing, by the electronic device, composition prediction on the first frame when the second frame includes a layer whose requested composition manner is GPU composition, the second frame being a previous frame of the first frame.

In an implementation of this application, the second frame includes a layer whose requested composition manner is GPU composition. With reference to that the second frame is a previous frame of the first frame, it may be learned that there is a high probability that the first frame also includes a layer whose requested composition manner is GPU composition (because a change between the two frames is generally not large, when the previous frame includes a layer whose requested composition manner is GPU composition, there is a high probability that the next frame also includes a layer whose requested composition manner is GPU composition). Therefore, in this case, it may be determined that composition prediction is performed on the first frame, which can increase a probability of performing composition prediction on the first frame, and save a composition time of the first frame, thereby avoiding picture stuttering of the electronic device, and improving user experience.

**In a possible implementation,** the performing, by the electronic device, composition prediction on a first frame includes: performing, by the electronic device, composition prediction on the first frame when the first frame belongs to an animation effect frame.

In an implementation of this application, the first frame belongs to an animation effect frame. It may be understood that, because an animation effect needs to display complex and diverse dynamic pictures, a composition process of an animation effect frame that forms an animation effect is more complex than a composition process of a common frame, and a composition manner requested by a layer of the animation effect frame generally includes GPU composition. Therefore, in this case, it may be determined that composition prediction is performed on the first frame, which can increase a probability of performing composition prediction on the first frame, and save a composition time of the first frame, thereby avoiding picture stuttering of the electronic device, and improving user experience.

**In a possible implementation,** the animation effect frame includes one or more of the following: an image displayed in a process in which the electronic device starts a target application; or an image displayed in a process in which the electronic device exits the target application; or an image displayed in a process in which the electronic device enters a multi-task interface; or an image displayed in a process in which the electronic device enters a target application from a multi-task interface.

In an implementation of this application, the animation effect frame includes one or more of the following: an image displayed in a process in which the electronic device starts a target application; or an image displayed in a process in which the electronic device exits the target application; or an image displayed in a process in which the electronic device enters a multi-task interface; or an image displayed in a process in which the electronic device enters a target application from a multi-task interface.

Optionally, an image displayed in a process of the electronic device may be set to an animation effect frame in a preset manner. For example, an image displayed in a screen unlocking process of the electronic device may be set to an animation effect frame.

Optionally, the animation effect frame further includes an image displayed in a screen refresh rate switching process.

**In a possible implementation,** the electronic device displays the animation effect frame on the display screen during switching from displaying the first user interface to displaying the second user interface.

In an implementation of this application, the animation effect frame is displayed on the display screen of the electronic device during switching of the electronic device from displaying the first user interface to displaying the second user interface.

Optionally, the animation effect frame may be further displayed in a background of the electronic device. For example, if a start procedure of the target application is performed in the background of the electronic device, a picture in the start procedure of the target application is displayed in the background.

**In a possible implementation,** the performing, by the electronic device, composition prediction on a first frame further includes: performing, by the electronic device, composition prediction on the first frame when the second frame does not include a layer whose requested composition manner is GPU composition, the second frame being a previous frame of the first frame.

In an implementation of this application, when the second frame does not include a layer whose requested composition manner is GPU composition, and the first frame is an animation effect frame, the electronic device performs composition prediction on the first frame. It may be understood that even if a previous frame (the second frame) of the first frame does not include a layer whose requested composition manner is GPU composition, because the first frame is an animation effect frame, the first frame may also include a plurality of layers whose requested composition manner is GPU composition. Therefore, in this case, it may be determined that composition prediction is performed on the first frame, which can increase a probability of performing composition prediction on the first frame, and save a composition time of the first frame, thereby avoiding picture stuttering of the electronic device, and improving user experience.

**In a possible implementation,** layer data of the first frame is the same as layer data of the second frame; or layer data of the first frame is different from layer data of the second frame; and the second frame is a previous frame of the first frame.

In an implementation of this application, layer data of the first frame may be the same as layer data of the second frame, or layer data of the first frame may be different from layer data of the second frame. When layer data of the first frame is the same as layer data of the second frame, it indicates that the first frame is the same as the second frame. With reference to that the second frame includes a layer whose requested composition manner is GPU composition, it indicates that there is a high probability that the first frame also includes a layer whose requested composition manner is GPU composition. Therefore, in this case, it may be determined that composition prediction is performed on the first frame, which can increase a probability of performing composition prediction on the first frame, and save a composition time of the first frame, thereby avoiding picture stuttering of the electronic device, and improving user experience.

Layer data of the first frame being different from layer data of the second frame indicates that the second frame has changed compared with the first frame. With reference to that the second frame includes a layer whose requested composition manner is GPU composition, it may be understood that, when a previous frame of the first frame includes a layer whose requested composition manner is GPU composition, composition prediction is performed on the first frame even if the previous frame of the first frame is different from the first frame. In this implementation, a probability of performing composition prediction on the first frame can be increased, thereby reducing a composition time of the first frame, avoiding picture stuttering, and further improving user experience.

**In a possible implementation,** a composition manner of the first frame is the same as a composition manner of the second frame; or a composition manner of the first frame is different from a composition manner of the second frame; and the second frame is a previous frame of the first frame.

In an implementation of this application, a composition manner of the first frame may be the same as a composition manner of the second frame, or a composition manner of the first frame may be different from a composition manner of the second frame. When a composition manner of the first frame is the same as a composition manner of the second frame, with reference to that the second frame includes a layer whose requested composition manner is GPU composition, it indicates that the first frame also includes a layer whose requested composition manner is GPU composition. Therefore, in this case, it may be determined that composition prediction is performed on the first frame, which can increase a probability of performing composition prediction on the first frame, and save a composition time of the first frame, thereby avoiding picture stuttering of the electronic device, and improving user experience.

The composition manner of the first frame being different from the composition manner of the second frame indicates that the second frame has changed compared with the first frame. With reference to that the second frame includes a layer whose requested composition manner is GPU composition, it may be understood that, when a previous frame of the first frame includes a layer whose requested composition manner is GPU composition, composition prediction is performed on the first frame even if the previous frame of the first frame is different from the first frame. In this implementation, a probability of performing composition prediction on the first frame can be increased, thereby reducing a composition time of the first frame, avoiding picture stuttering, and further improving user experience.

According to a second aspect, this application provides an electronic device, where the electronic device includes a display screen, a memory, and a processor coupled to the memory; the display screen is configured to display an interface; and the memory stores a computer program, and when the processor executes the computer program, the electronic device is enabled to implement the method according to any one of the implementations of the first aspect.

According to a third aspect, this application provides a computer-readable storage medium, where the computer-readable storage medium stores a computer program or computer instructions, and the computer program or the computer instructions are executed by a processor to implement the method according to any one of the implementations of the first aspect.

According to a fourth aspect, an embodiment of this application provides a computer program product. When the computer program product is executed by a processor, the method according to any one of the implementations of the first aspect is implemented.

According to a fifth aspect, an embodiment of this application provides a chip. The chip includes a processor and a memory, where the memory is configured to store a computer program or computer instructions, and the processor is configured to execute the computer program or the computer instructions stored in the memory, so that the chip performs the method according to any one of the implementations of the first aspect.

The solutions provided by the second aspect to the fifth aspect are used to implement or cooperate in implementing the method that is correspondingly provided in the first aspect, and therefore can achieve beneficial effects that are the same as or correspond to those of the corresponding method in the first aspect. Details are not described herein again.

### BRIEF DESCRIPTION OF DRAWINGS

FIG. 1 is a schematic diagram of a hardware structure of an electronic device 100 according to an embodiment of this application;
FIG. 2 is a block diagram of a software structure of a terminal device according to an embodiment of this application;
FIG. 3 is a schematic flowchart of a frame composition method according to an embodiment of this application;
FIG. 4A(1) and FIG. 4A(2) are first schematic diagrams of interface switching according to an embodiment of this application;
FIG. 4B(1) to FIG. 4B(6) are schematic diagrams of animation effect playing according to an embodiment of this application;
FIG. 5A and FIG. 5B are second schematic diagrams of interface switching according to an embodiment of this application;
FIG. 6A and FIG. 6B are third schematic diagrams of interface switching according to an embodiment of this application;
FIG. 7A and FIG. 7B are fourth schematic diagram of interface switching according to an embodiment of this application;
FIG. 8 is a schematic diagram of not performing composition prediction according to an embodiment of this application;
FIG. 9 is a schematic diagram of performing composition prediction according to an embodiment of this application; and
FIG. 10 is a schematic diagram of a workflow of software in a user interface switching process according to an embodiment of this application.

### DESCRIPTION OF EMBODIMENTS

Terms used in the following embodiments of this application are merely intended to describe specific embodiments, but not intended to limit this application. As used in this specification and the claims of this application, singular expressions "one", "a", "the", "foregoing", and "this" are intended to include plural expressions, unless otherwise clearly specified in the context. It should be further understood that the term "and/or" used in this application indicates and includes any or all possible combinations of one or more listed items.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

A frame composition processing method provided in the embodiments of this application may be applied to an electronic device having a display function.

The electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

To better understand the embodiments of this application, the following describes a structure of the terminal device in the embodiments of this application.

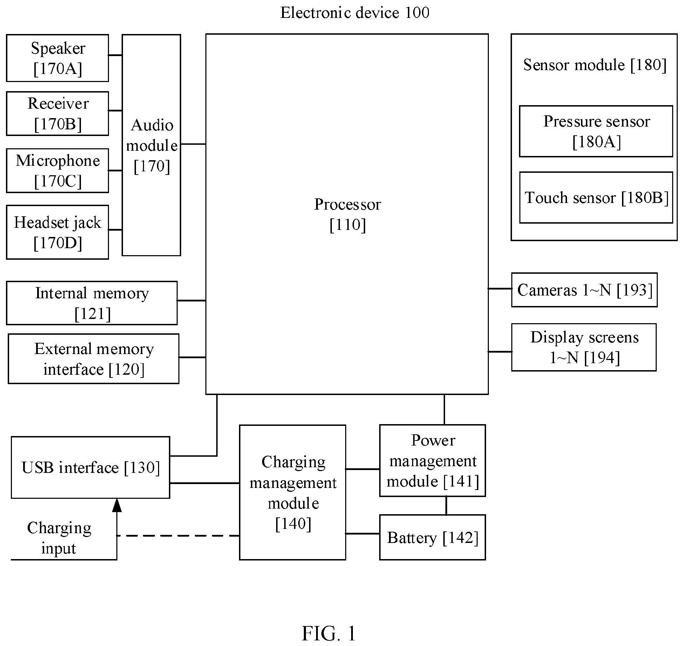

FIG. 1 is a schematic diagram of a structure of an electronic device 100 according to an embodiment of this application.

This embodiment is described in detail below by using the electronic device 100 as an example. It should be understood that the electronic device 100 may have more or fewer components than those shown in FIG. 1, may combine two or more components, or may have different component configurations. The various components shown in FIG. 1 may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an audio module 170, a speaker 170A, a receiver 170B, a microphone 170C, a headset jack 170D, a sensor module 180, a camera 193, a display screen 194, and the like. The sensor module 180 may include a pressure sensor 180A, a touch sensor 180B, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display screen 194, the camera 193, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computation, for image composition. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

The camera 193 is configured to capture a still image or a video. The electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU.

The external memory interface 120 may be configured to be connected to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

The internal memory 121 may be configured to store computer executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a face recognition function, a fingerprint recognition function, and a mobile payment function), and the like. The data storage area may store data (such as face information template data and a fingerprint information template) created in a use process of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function such as music playing or sound recording by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "horn", is configured to convert an audio electrical signal into a sound signal. The electronic device 100 may listen to music or answer a call in a hands-free mode by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice. The microphone 170C, also referred to as a "mic" or "mike", is configured to convert a sound signal into an electrical signal.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of a pressure based on a change of the capacitance. When a touch operation is performed on the display screen 194, the electronic device 100 detects intensity of the touch operation based on the pressure sensor 180A. The electronic device 100 may also calculate a touch location based on a detected signal of the pressure sensor 180A. In some embodiments, touch operations performed at a same touch position but having different touch operation intensity may correspond to different operation instructions.

The touch sensor 180B is also referred to as a "touch panel". The touch sensor 180B may be disposed on the display screen 194, and the touch sensor 180B and the display screen 194 constitute a touch screen, which is also referred to as a "touch control screen". The touch sensor 180B is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180B may alternatively be disposed on a surface of the electronic device 100 at a position different from that of the display screen 194.

A software system of the electronic device 100 may use a layered architecture, an event-driven architecture, a microkernel architecture, a microservice architecture, a cloud architecture, or the like. In the embodiments of this application, an Android system with a layered architecture is used as an example to describe a software structure of the electronic device 100.

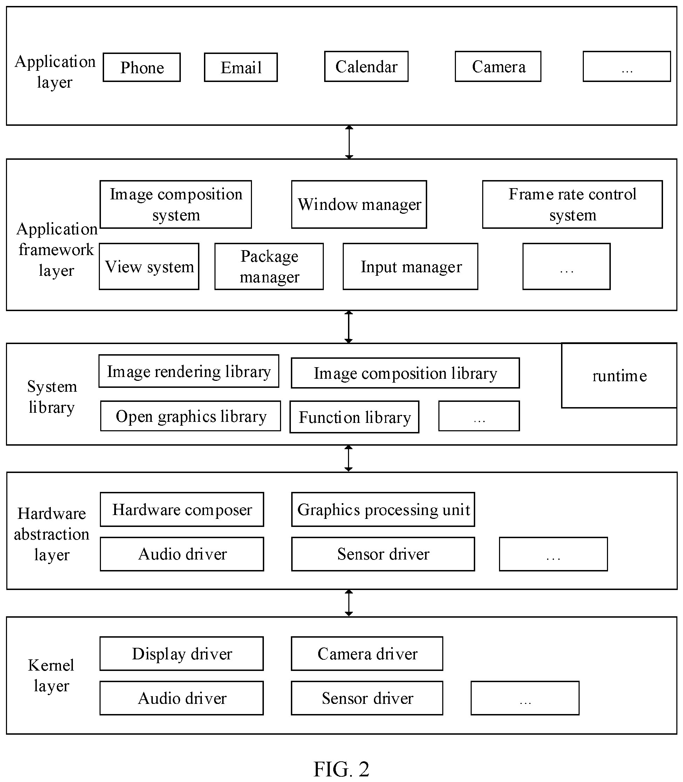

FIG. 2 is a block diagram of a software structure of a terminal device according to an embodiment of this application. In the layered architecture, software is divided into several layers, and each layer has a clear role and task. Layers communicate with each other through a software interface. In some embodiments, an Android system is divided into five layers: an application layer, an application framework layer, an Android runtime (Android runtime) and a system library, a hardware abstraction layer, and a kernel layer from top to bottom.

The application layer may include a series of application packages. As shown in FIG. 2, the application package may include applications such as Phone, Email, Calendar, and Camera.

The application framework layer provides an application programming interface (application programming interface, API) and a programming framework for applications at the application layer. The application framework layer includes some predefined functions.

As shown in FIG. 2, the application framework layer may include an image composition system, a window manager, a frame rate control system, a view system, a package manager, an input manager, and the like.

The image composition system is configured to control image composition and generate a vertical synchronization (vertical synchronization, Vsync) signal. The image composition system includes a composition thread, a Vsync thread, and a buffer (queue buffer) thread. The composition thread is configured to be awoken by a Vsync signal to perform composition. The Vsync thread is configured to generate a next Vsync signal based on a Vsync signal request. The buffer thread is configured to store buffers, generate a Vsync signal request, awake the composition thread, and the like. One or more buffer queues exist in the buffer thread, and are configured to store buffers corresponding to different applications.

The window manager is configured to manage window programs. The window manager may obtain a size of the display screen, determine whether a status bar exists, lock a screen, capture a screenshot, and the like.

The frame rate control system is configured to adjust a screen refresh rate.

The view system includes visual controls such as a text display control and a picture display control. The view system may be configured to build an application. A display interface may include one or more views. For example, a display interface including an SMS notification icon may include a text display view and a picture display view.

The package manager is configured to manage programs in a system, such as installing, uninstalling, and upgrading an application.

The input manager is configured to manage programs input to the device. For example, an input system may determine an input operation such as a mouse click operation, a keyboard input operation, and a touch sliding operation.

The application framework layer may further include an activity manager and a resource manager.

The activity manager is configured to manage a lifecycle of each application and a navigation rollback function, and is responsible for creating a main thread of Android, and maintaining the lifecycle of each application.

The resource manager provides various resources for an application, for example, a localized string, an icon, a picture, a layout file, and a video file.

The Android runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run in the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, an image rendering library, an image composition library, an open graphics library, a function library, and a media library.

The image rendering library (RenderEngine) is configured to render a two-dimensional or three-dimensional image. The image composition library (surface flinger) is configured to composite a two-dimensional or three-dimensional image.

In a possible implementation, the application draws and renders an image by using the image rendering library, and then the application transmits a drawn and rendered image to a buffer queue of the image composition system. Whenever a Vsync signal arrives, the image composition system sequentially obtains a frame of to-be-composited image from the buffer queue, and then composites the image by using the image rendering library.

The open graphics library (open graphics library, OpenGL) is a cross-platform and cross-language graphics programming interface. It is widely used to implement 2D and 3D graphics rendering and is a core component of many applications, games, and web browsers. For example, the OpenGL is configured to transfer data drawn by the APP to the GPU for processing. The function library provides the macro, type definition, string manipulation function, mathematical calculation function, and input/output function used in the C language.

The media library supports playing and recording in a plurality of common audio and video formats, a still image file, and the like. The media library may support a plurality of audio and video encoding formats, for example, MPEG4, H.264, MP3, AAC, AMR, JPG, and PNG.

The hardware abstraction layer may include a plurality of library modules. The library modules may be, for example, a hardware composer (hwcomposer, HWC), a graphics processing unit (graphics processing unit, GPU), an audio driver, and a sensor driver. The Android system may load a corresponding library module for device hardware, to implement accessing of the device hardware by the application framework layer. The device hardware may include, for example, an LCD display screen and a camera in the electronic device.

The kernel layer is a layer between hardware and software. The kernel layer includes at least a display driver, a camera driver, an audio driver, and a sensor driver.

The hardware may be an audio device, a Bluetooth device, a camera device, a sensor device, or the like.

The following describes examples of workflows of software and hardware of the electronic device 100 with reference to an application starting scenario or a scenario in which interface switching occurs in an application.

When a touch sensor 180K in a touch panel receives a touch operation, a kernel layer processes the touch operation into an original input event (including information such as touch coordinates, touch pressure, and a timestamp of the touch operation). The original input event is stored at the kernel layer. The kernel layer reports the original input event to the input manager of the application framework layer by using an input processing library. The input manager of the application framework layer parses information of the original input event (including an operation type, a reporting position, and the like), determines a focus application based on a current focus, and sends information obtained through parsing to the focus application. The focus may be a touch point in the touch operation or a click position in the mouse click operation. The focus application is an application running in a foreground of the terminal device or an application corresponding to the touch position in the touch operation. The focus application determines, based on the information of the original input event obtained through parsing (for example, the reporting position), a control corresponding to the original input event.

For example, the touch operation is a touch sliding operation, and a control corresponding to the touch sliding operation is a list control of a WeChat application. The WeChat application invokes the image rendering library in the system library to draw and render an image by using the view system of the application framework layer. The WeChat application sends the drawn and rendered image to the buffer queue of the image composition system. The drawn and rendered image in the image composition system is composited into a WeChat interface by using the image composition library in the system library. The image composition system enables the screen (the display screen) to display a corresponding interface of the WeChat application by using the display driver of the kernel layer.

For ease of understanding, example descriptions of some concepts related to the embodiments of this application are provided for reference.
1. Frame: it refers to a single picture that is of the smallest unit and that is displayed on the interface. A frame may be understood as a still picture, and quickly and continuously displaying a plurality of connected frames may create the illusion of object movement. A frame rate refers to a quantity of frames for refreshing pictures in 1 second, or may be understood as a quantity of times the graphics processing unit in the terminal device refreshes the picture per second. A higher frame rate allows for a smoother and more realistic animation. The more frames per second, the smoother the displayed actions.
   It should be noted that, before the frame is displayed on the interface, processes such as layer drawing, layer rendering, and layer composition usually need to be performed.
2. Layer drawing: it refers to drawing a picture of a display interface. The display interface may include one or more layers (views). Each layer may be drawn by a visual control of the view system. Each layer includes sub-layers. A sub-layer corresponds to a widget of the layer. For example, a sub-layer corresponds to a symbol of the picture layer.
3. Layer rendering: it refers to performing a coloring operation on the drawn layer, adding a 3D effect to the drawn layer, or the like. For example, the 3D effect may be a lighting effect, a shadow effect, a texture effect, or the like. For another example, layer rendering may be performing scaling, rounded corner, blur effect, special angle rotation, high dynamic range HDR lighting composition, and shadow effect, or the like on the layer.
4. Layer composition: it refers to a process of compositing one or more rendered layers into a display interface.
5. Frame composition: it includes operations such as layer drawing, layer rendering, and layer composition.

In some scenarios, a composition prediction mechanism is proposed to alleviate a problem of animation effect stuttering due to a long GPU composition time, thereby reducing the GPU composition time. However, in an existing composition prediction mechanism, a phenomenon of composition prediction failure tends to occur. Consequently, a problem of animation effect stuttering caused by long GPU composition time cannot be effectively alleviated. In view of this, this application provides a frame composition method. When M first layers in a first frame meet a first preset condition, composition prediction is directly performed on the first frame, which can increase a probability of performing composition prediction on the frame, and save a composition time of the first frame, thereby avoiding picture stuttering of an electronic device, and improving user experience.

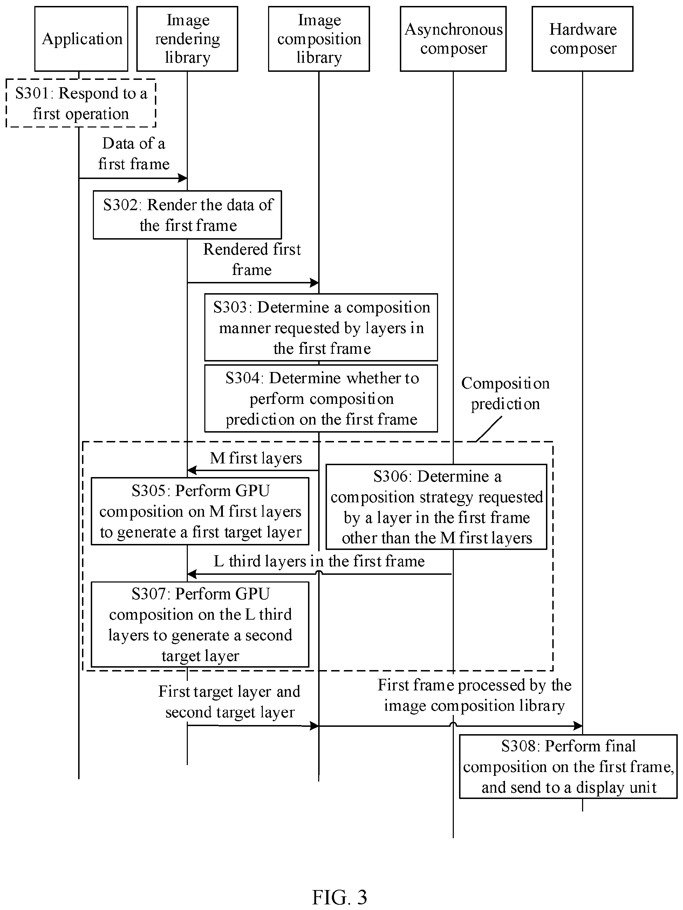

Referring to FIG. 3, FIG. 3 is a schematic flowchart of a frame composition method according to an embodiment of this application. As shown in FIG. 3, a workflow of software of the electronic device 100 includes but is not limited to steps S301 to S308. An execution body (unit) in FIG. 3 includes an application, an image rendering library, an image composition library, an asynchronous composer, a hardware composer, and the like. The application is, for example, an application package at the application layer in FIG. 2, for example, Phone, Email, Calendar, or Camera. The image rendering library is, for example, the image rendering library shown in FIG. 2. The image composition library is, for example, the image composition library shown in FIG. 2. The hardware composer is, for example, the hardware composer shown in FIG. 2. The asynchronous composer is configured to perform composition prediction on a frame. For example, the electronic device 100 creates a first thread and a second thread (the first thread and the second thread are executed in parallel and do not affect each other). The first thread is configured to process layers on which GPU composition needs to be performed (content as shown in step S305), and the second thread is configured to determine a composition manner requested by another layer in the frame based on information fed back by the hardware composer. The layers on which GPU composition needs to be performed are determined in the second thread, and are sent to the first thread, so that the first thread performs composition processing (content as shown in step S307).

**S301: An application responds to a first operation (optional).**

When the application responds to the first operation, a display screen of the electronic device switches from displaying a first user interface to displaying a second user interface. An operation type of the first operation is, for example, pressing, moving, releasing, or sliding. The first operation may be, for example, an operation performed on the electronic device by using one or more of the following: a display screen, a physical key, an image sensor, a microphone, and the like. It may be understood that the first operation is not limited in this application. The solution provided in this application is applied to a scenario in which when the display screen of the electronic device switches from displaying the first user interface to displaying the second user interface, the display screen further displays at least one frame. Certainly, in some scenarios, switching of the display screen from the first user interface to the second user interface runs in a background of the electronic device, and is not directly presented on the display screen of the electronic device. This scenario still falls within the protection scope of this application.

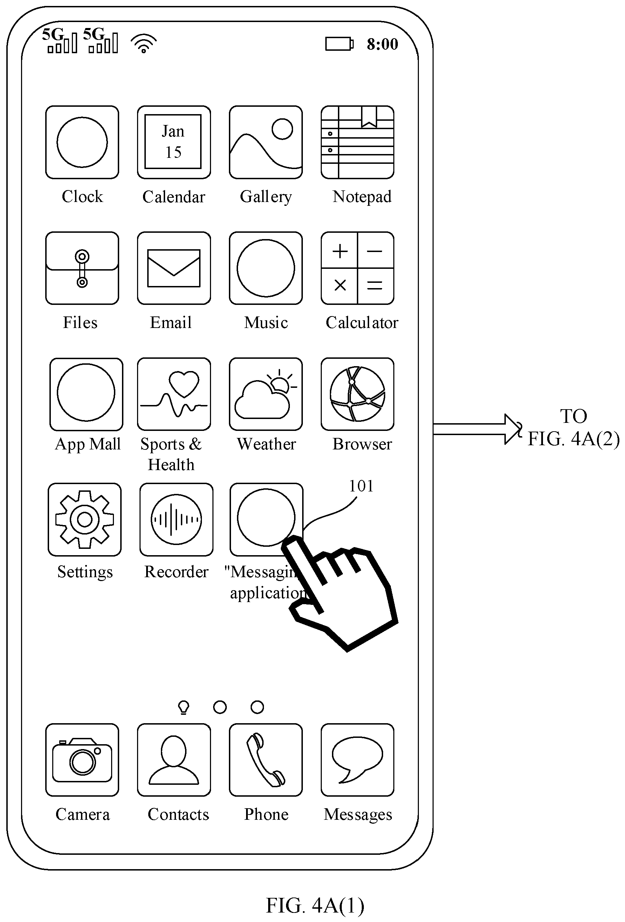

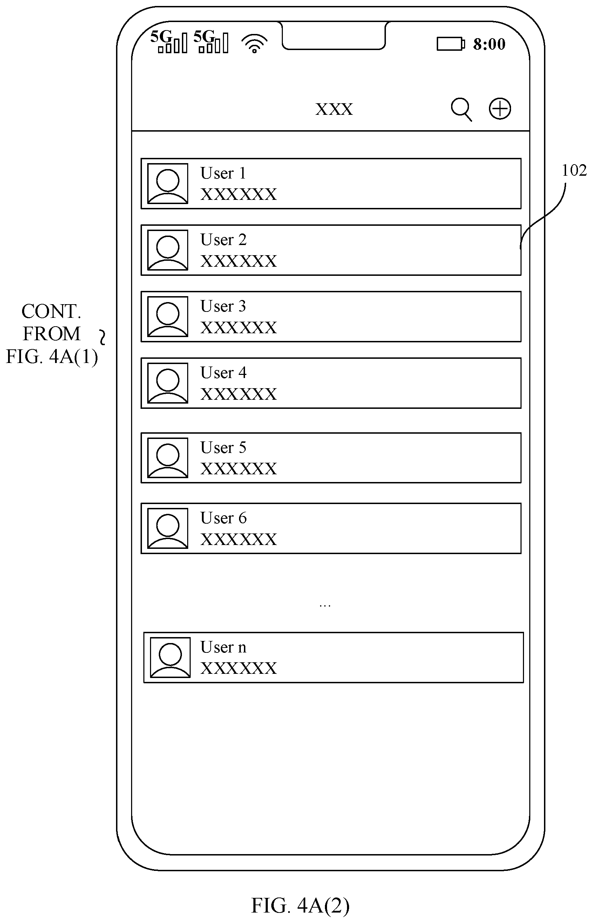

Next, a possible implementation of the first operation is provided. For example, as shown in FIG. 4A(1), in response to operating, by a user, an icon 101 of a "messaging" application on a home screen of a mobile phone (for example, the user tapping the icon 101), the mobile phone displays an interface 102 shown in FIG. 4A(2). The interface 102 is an interface after the "messaging" application is started. In some embodiments, as shown in FIG. 4A(2), the user interface 102 may be an interface of a user messaging list.

The interface shown in FIG. 4A(1) may be referred to as the first user interface, and the interface 102 may be referred to as the second user interface. In a process of switching from the first interface to the second interface, the electronic device may further display a plurality of transition pictures (referred to as frames). For example, when the user taps the icon 101, an image displayed on the interface 102 changes from small to large, until the image displayed on the interface 102 fills an entire screen (or referred to as a display screen).

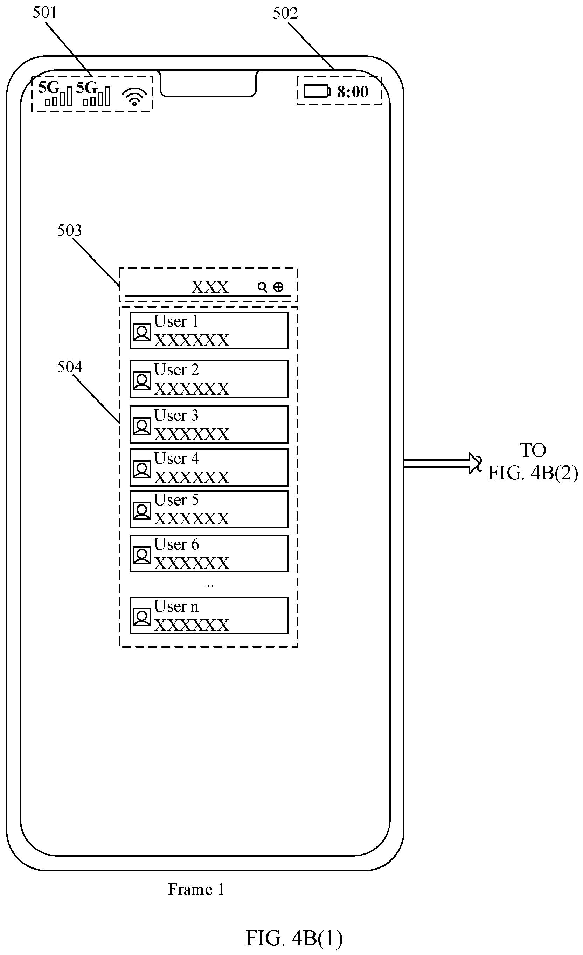

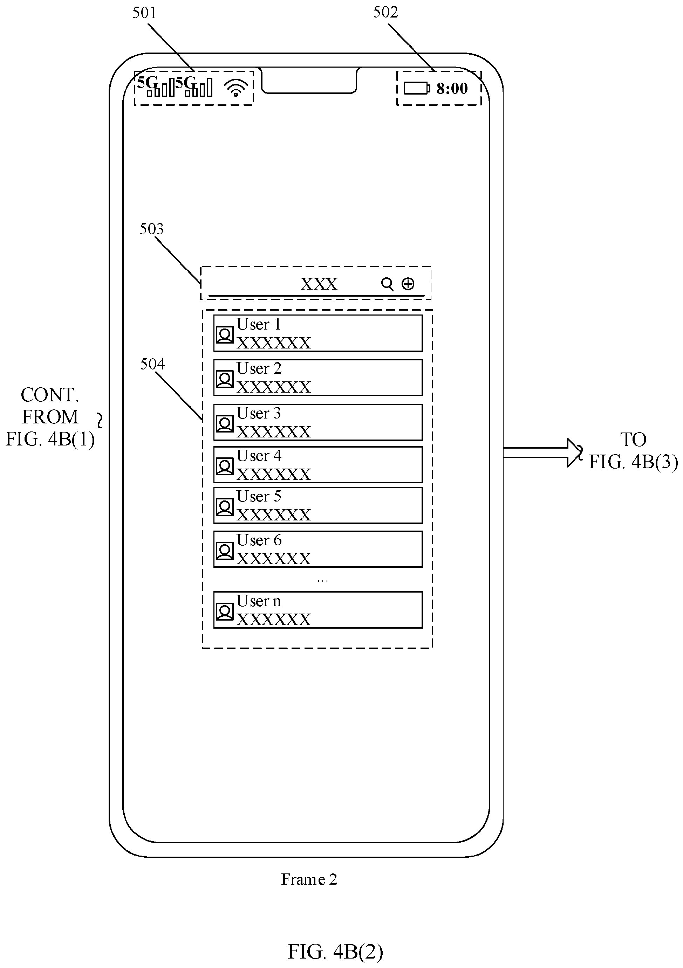

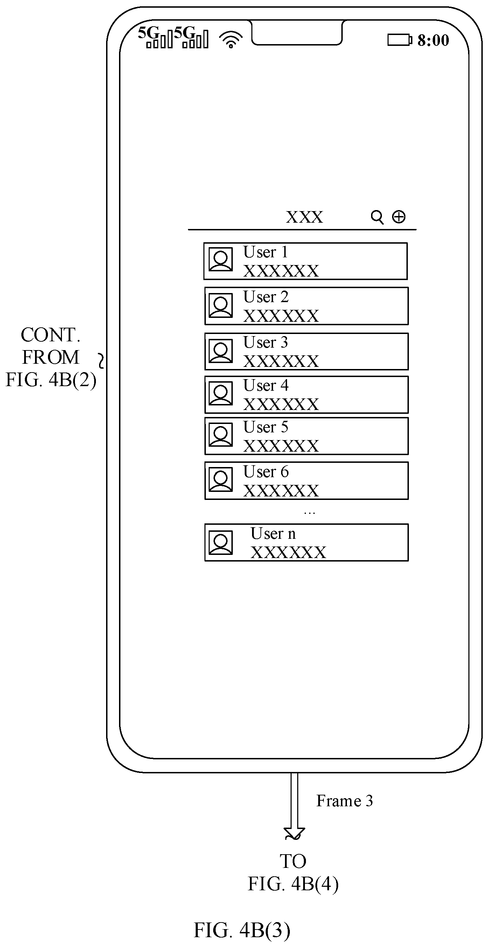

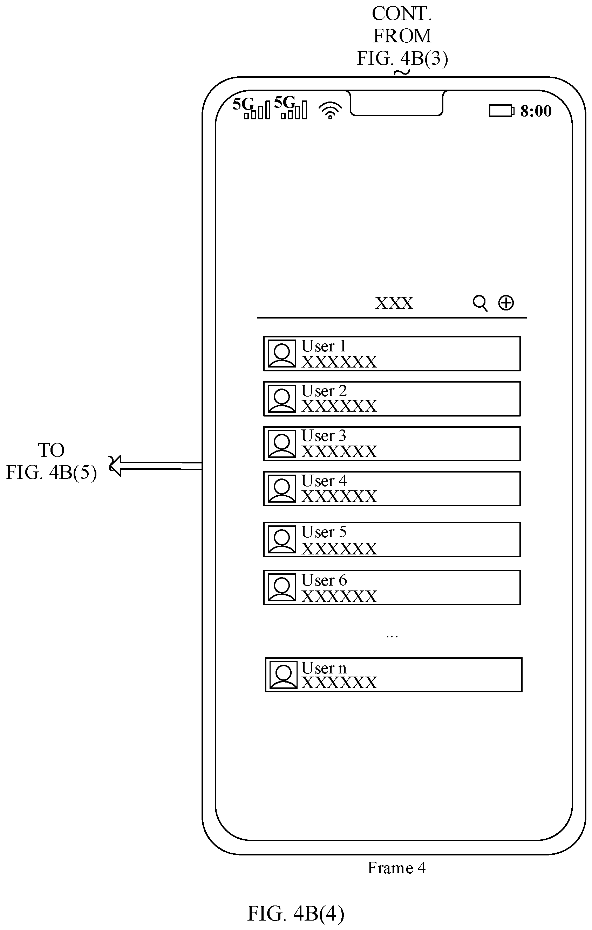

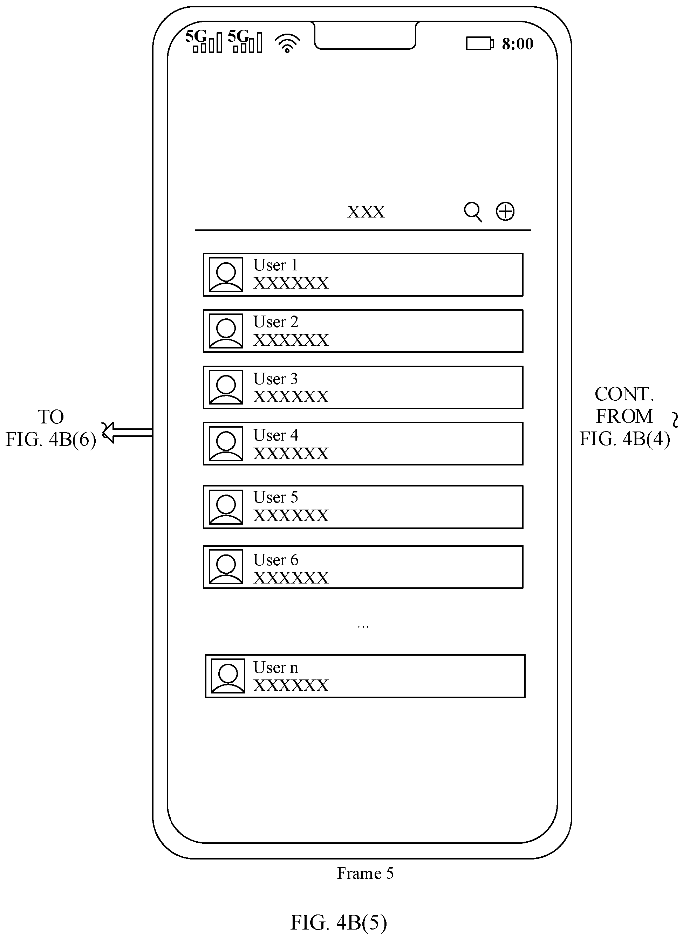

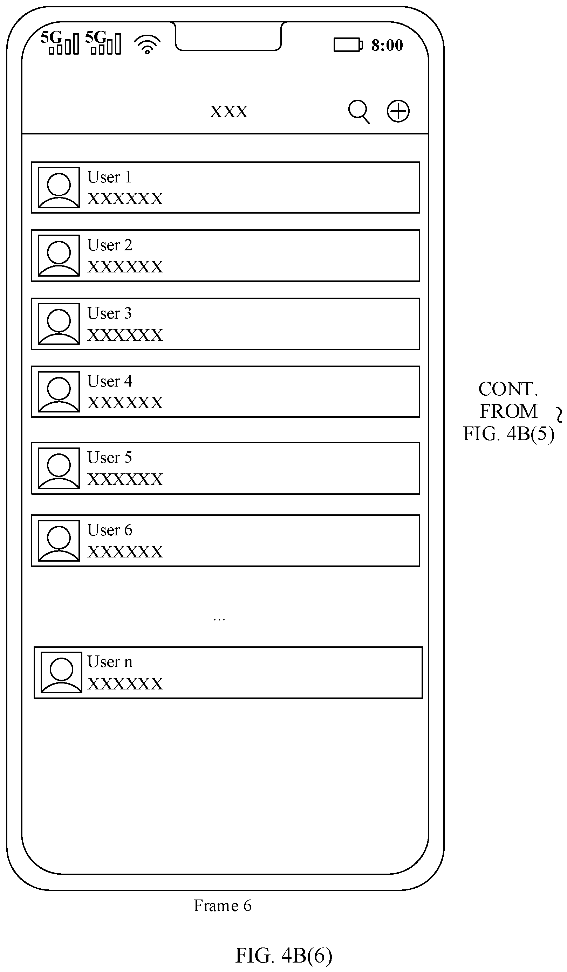

For example, description is made by using an example in which the mobile phone continues to play six image frames in a process of switching from the first interface to the second interface. After the user taps the icon 101 of the "messaging" application, the mobile phone continuously plays image frames including a frame 1, a frame 2, a frame 3, a frame 4, a frame 5, and a frame 6 as shown in FIG. 4B(1) to FIG. 4B(6).

Optionally, the first user interface and/or the second user interface may further be in a screen-off state. For example, the first user interface is in a screen-off state, and in response to the first operation (such as an unlocking operation), the application enables the display screen to be turned on and display the second user interface, as shown in FIG. 4A(1). For another example, the display screen displays the first user interface, as shown in FIG. 4A(1), and in response to the first operation (such as a lock screen operation), the application enables the display screen to be in a screen-off state.

In a possible implementation, in a process in which the application responds to the first operation, the electronic device sends layer data that needs to be drawn to the layer rendering library. For example, in a process in which the application responds to the first operation, the electronic device may initiate a layer drawing task by using a schedule traversals function of a ViewRoot class of the application framework layer, and then transfer, by using the open graphics library in the system library, the data that needs to be drawn to the GPU for processing. The GPU completes data drawing, for example, the image rendering library in the system library performs data drawing processing by using the GPU. For a specific processing process, reference may be made to step S302.

**S302: The image rendering library renders data of a first frame.**

The first frame may be any frame in the user interface switching process. Taking FIG. 4B(1) to FIG. 4B(6) as an example, the first frame may be any frame among the frame 1, the frame 2, the frame 3, the frame 4, the frame 5, and the frame 6.

For example, the image rendering library may be understood as a render thread. The render thread may apply for cache space that is configured to store texture data of the application. When the render thread detects that data in the cache space is updated, the render thread reads the texture data of the application in the cache space, and controls the GPU to render the texture data of the application. For example, updated data in the cache space maintained by the render thread may be referred to as texture data of the application of the first frame. The render thread may read the texture data of the application of the first frame in the cache space, and control the GPU to render the texture data of the application of the first frame.

It should be noted that, how to render the texture data of the application by the GPU is not limited in this embodiment of this application. It may be understood that the data obtained by the GPU through rendering exists in a unit of layer, so that a plurality of layers can be obtained by the GPU through rendering. The layers obtained by the GPU through rendering include a variety of data, such as scaling, rounded corner, blur effect, special angle rotation, high dynamic range HDR lighting composition, and shadow effect.

In a possible implementation, the cache space is filled with data obtained by rendering/drawing, and the data is transferred to the image composition library, so that the layer composition library performs alignment to perform a composition operation. It should be noted that, the cache space for caching the texture data of the application and the cache space for caching the rendered first frame may be the same cache space, or may be different cache space. This is not limited in this embodiment of this application.

**S303: The image composition library determines a composition manner requested by layers in the first frame.**

In a possible implementation, the image composition library may read the rendered first frame (the first frame includes a plurality of layers obtained by the GPU through rendering) from the foregoing cache space, and then perform a composition operation on the plurality of layers in the first frame. It may be understood that the electronic device may composite a layer that needs to be composited by using the GPU and the hardware composer. A composition manner of GPU composition may meet a complex composition requirement. For example, a layer that cannot be composited by the hardware composer may be composited by the GPU. For example, when a rendering effect of a layer includes one or more of scaling, rounded corner, blur effect, special angle rotation, high dynamic range HDR lighting composition, and shadow effect, the hardware composer cannot composite the layer. In this case, the GPU may be enabled to composite layers including the foregoing rendering effect. It should be noted that, with development of technology, the hardware composer may have a stronger function. Therefore, a function of the hardware composer should not be limited in this application.

In a possible implementation, after reading the rendered first frame, the image composition library determines an attribute of each layer in the first frame. Then, based on the attribute of each layer, it is determined whether a composition manner requested by the layer is GPU composition.

For example, the composition manner requested by the layer may be determined by determining whether the attributes of the layers in the first frame meet at least one of a plurality of preset attribute items.

The plurality of preset attribute items include scaling. When the attributes of the layers in the first frame include scaling, the composition manner requested by the layer (requestedCompositionType) is determined as GPU composition. For ease of description, a layer whose requested composition manner is GPU composition may be referred to as a first layer. In the foregoing determining manner, M first layers may be determined from the plurality of layers included in the first frame, where M is a positive integer. For example, M is 1, 2, 3, or 5. Scaling refers to a case in which a size of a layer obtained by the image rendering library is different from an actually displayed size of the layer. If the size of the layer obtained by the image rendering library is less than the actually displayed size of the layer, the attribute of the layer is scaling down. If the size of the layer obtained by the image rendering library is greater than the actually displayed size of the layer, the attribute of the layer is scaling up. Referring to the frame 1 and the frame 2 shown in FIG. 4B(1) to FIG. 4B(6), the frame 1 and the frame 2 each include four layers: a signal icon 501, a battery icon 502, a search box 503, and content 504. It may be learned from FIG. 4B(1) to FIG. 4B(6) that a size of each of the signal icon 501 and the battery icon 502 in each frame is the same as a finally displayed size, so no scaling effect exists. Sizes of the search box 503 and the content 504 in the frame 1 and the frame 2 are both less than a finally displayed size. It may be understood that attributes of layers corresponding to the search box 503 and the content 504 include scaling.

Optionally, the plurality of preset attribute items further include rounded corner, blur effect, special angle rotation, high dynamic range HDR lighting composition, shadow effect, and the like. For example, when the attributes of the layers in the first frame include any one or more of scaling, rounded corner, blur effect, special angle rotation, high dynamic range HDR lighting composition, and shadow effect, a composition manner requested by the layer may be determined as GPU composition.

Optionally, an attribute of any layer in the first frame may not meet the plurality of preset attribute items. In this case, how the electronic device composites the plurality of layers included in the first frame is not limited in this application.

**S304: The image composition library determines whether to perform composition prediction on the first frame.**

The foregoing content briefly describes composition prediction, and composition prediction is further described herein with reference to the accompanying drawings. It may be learned that composition prediction is a layer composition processing method, and is used to reduce a time occupied by layer composition. For details, refer to the following description of S305 to S307. Details are not described herein.

In a possible implementation, one or more of the following conditions may be used to determine whether to perform composition prediction on the first frame:
A second frame in the following refers to a previous frame of the first frame. With reference to FIG. 4B(1) to FIG. 4B(6), if the first frame is the "frame 2", the second frame is the "frame 1". If the first frame is the "frame 3", the second frame is the "frame 2".

**Condition 1: Whether the layers in the first frame include a layer whose requested composition manner is GPU composition.**

For example, reference may be made to the foregoing description in S303 to determine whether the layers in the first frame include a layer whose requested composition manner is GPU composition.

**Condition 2: Whether layer data of the first frame is the same as layer data of the second frame.**

For example, the layer data refers to data such as a quantity of layers, sizes of the layers, and content of the layers. The layer data of the first frame or the second frame may be recorded by using a hash value. In a possible implementation, it may be determined whether the layer data of the first frame is the same as the layer data of the second frame by detecting BitMaps corresponding to the first frame and the second frame.

**Condition 3: Whether a composition manner of the first frame is the same as a composition manner of the second frame.**

It should be noted that, a composition manner of a frame is different from a composition manner requested by a layer. A composition manner of a frame refers to a set that includes a composition manner requested by each layer in the frame. For example, when the composition manner of the first frame is the same as the composition manner of the second frame, the layers in the first frame and the second frame are sorted according to a same rule, and composition manners requested by layers with a same sequence number in the first frame and the second frame are the same. For example, the first frame and the second frame each include three layers. If composition manners requested by the second layers in the first frame and the second frame are GPU composition, and composition manners requested by the other two layers are hardware composer composition, it can be described that the composition manner of the first frame is the same as the composition manner of the second frame.

The image composition library in S303 can determine the composition manners of the layers in the first frame based on the attributes of the layers. However, whether the remaining layers in the first frame can be composited by the hardware composer needs to be further determined. For example, the hardware composer can determine whether a layer can be processed by the hardware composer based on own hardware attributes. If the layer can be processed by the hardware composer, a composition strategy of the layer can be set to hardware processor composition. If the layer cannot be processed by the hardware composer, and needs to be processed by the GPU, the composition strategy of the layer can be set to GPU composition. Whether the layer can be processed by the hardware composer may be determined by using one or more of the following conditions: for example, bandwidth of the hardware composer, a quantity of layers input to the hardware composer, a size of a layer input to the hardware composer, and a layer format input to the hardware composer.

**Condition 4: Whether the first frame belongs to an animation effect frame.**

In this application, an animation effect frame refers to a frame that forms an animation effect. The animation effect includes consecutive N frames of pictures, where N is greater than or equal to 1. The electronic device starting to play the animation effect includes: the electronic device starting to play the animation effect based on an animation effect attribute. The animation effect attribute includes at least one of animation effect content, an animation effect size, animation effect duration, or an animation effect start position and an animation effect end position. The animation effect start position is used to indicate a position of a first frame of picture in N frames of pictures on the display screen, and the animation effect end position is used to indicate a position of a last frame of picture in the N frames of pictures on the display screen. Currently, a scenario in which an animation effect is played on the electronic device includes one or more of the following: The electronic device starts a target application, the electronic device exits an application, the electronic device enters a multi-task interface, the electronic device exits a multi-task interface, and the electronic device switches a screen refresh rate. Therefore, the animation effect frame includes one or more of the following: an image displayed in a process in which the electronic device starts a target application, an image displayed in a process in which the electronic device exits an application, an image displayed in a process in which the electronic device enters a multi-task interface, an image displayed in a process in which the electronic device starts an application from a multi-task interface, and an image displayed in a process in which the electronic device switches a screen refresh rate.

FIG. 4A(1), FIG. 4A(2), and FIG. 4B(1) to FIG. 4B(6) illustrate an example of an image displayed in a process in which the electronic device starts a target application. Therefore, the animation effect frame includes the frame 1, the frame 2, the frame 3, the frame 4, the frame 5, and the frame 6 in FIG. 4B(1) to FIG. 4B(6). Specifically, with reference to FIG. 4A(1), FIG. 4A(2), and FIG. 4B(1) to FIG. 4B(6), when the user taps the icon 101, a starting animation effect starts, and an image displayed on the interface 102 is played. When the image displayed on the interface 102 fills an entire screen (or referred to as the display screen), the starting animation effect ends.

It should be noted that, in a scenario of a starting animation effect, the starting animation effect may be an animation effect played when the user starts an application for the first time, or may be an animation effect played when the user starts an application not for the first time. "For the first time" means that the application neither runs in the foreground nor in the background. "Not for the first time" means that the application runs in the background. In this case, the starting animation effect may also be understood as a process of switching the application from running in the background to running in the foreground.

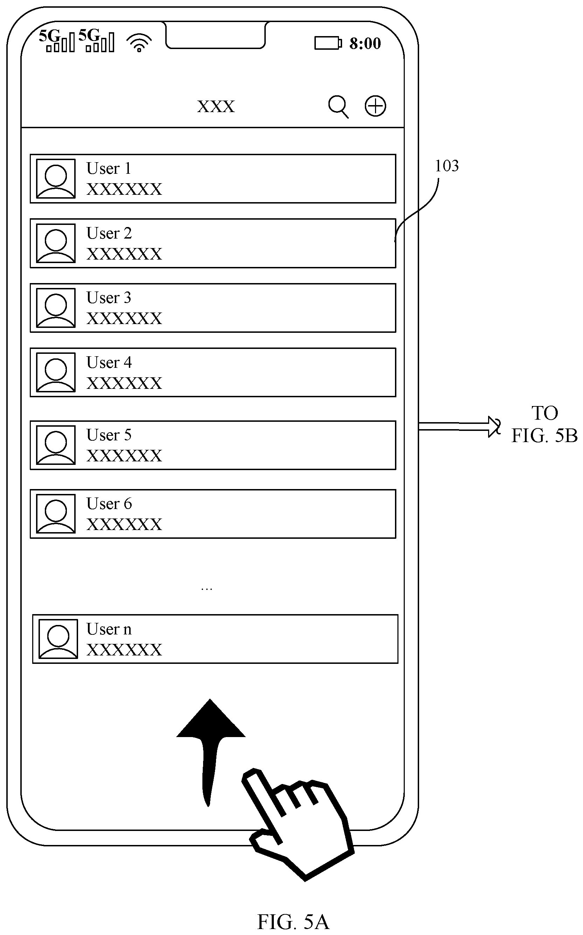

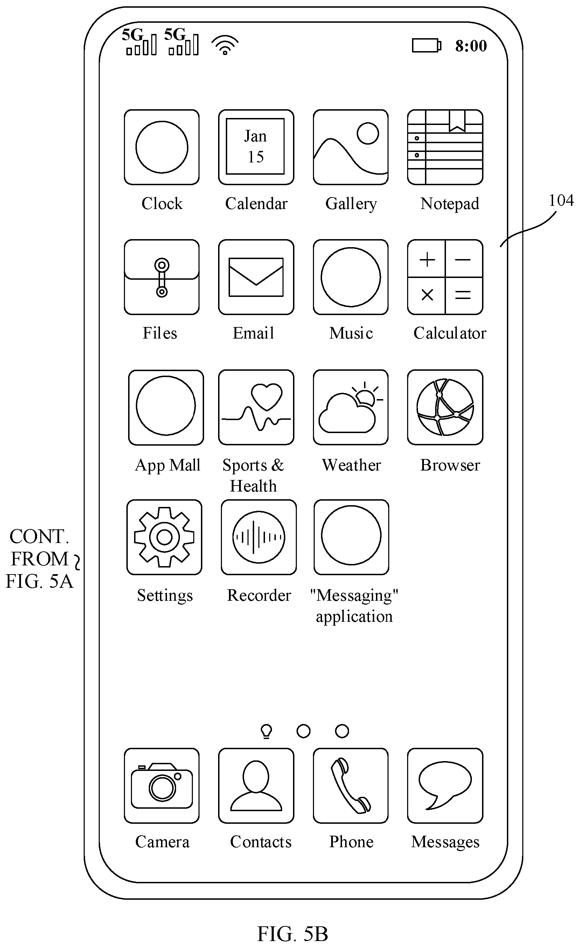

As an example, the application is a "messaging" application, and an animation effect scenario is a scenario of exiting the "messaging" application. For example, the mobile phone displays an interface 103 shown in FIG. 5A(1), and the interface 103 is an interface after the "messaging" application is started. For example, as shown in FIG. 5A(1), the interface 103 may be, for example, an interface of a user messaging list. Then, the mobile phone displays, in response to an exit operation performed by the user on the "messaging" application, an interface 104 shown in FIG. 5A(2). The interface 204 may be, for example, a main screen interface of the mobile phone. In some embodiments, the exit operation may be, for example, one of a gesture operation, a voice operation, or a touch operation. The touch operation may be, for example, a tap operation, a slide operation, or the like. As an example, the exit operation is a slide operation. For example, as still shown in FIG. 5A(2), the exit operation may be, for example, a slide-upward operation performed by the user on an interface of the "messaging" application.

In the scenario of exiting the "messaging" application, an exiting animation effect of the "messaging" application is a process from the user performing a slide-upward operation on the interface of the "messaging" application to the mobile phone displaying the main screen interface. In some embodiments, with reference to the foregoing embodiments, the exiting animation effect is a process in which an image displayed on the interface 102 changes from large to small. Specifically, when the user slides upward on the interface of the "messaging" application, the exiting animation effect starts. The image on the interface 102 displayed by the mobile phone starts to scale down. When the image displayed on the interface 102 fully exits, and the mobile phone displays the main screen interface, the exiting animation effect ends.

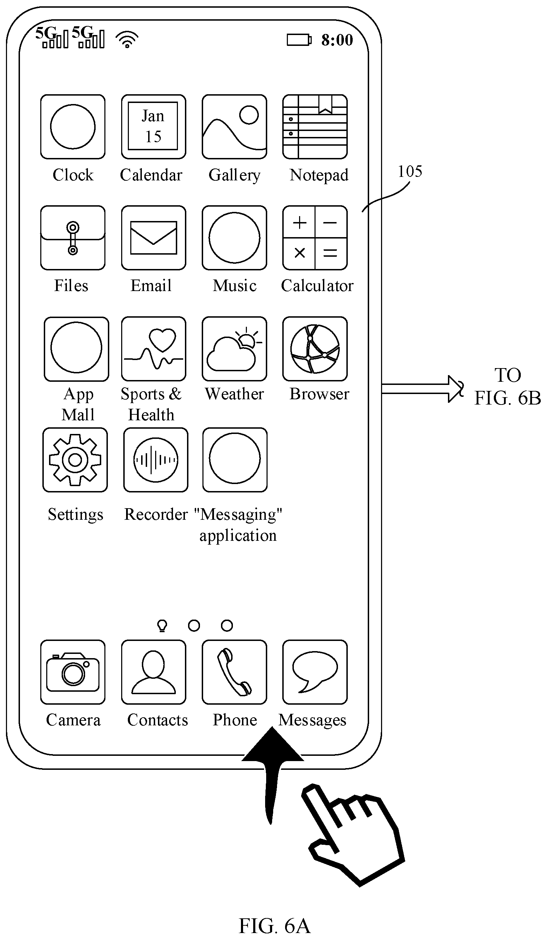

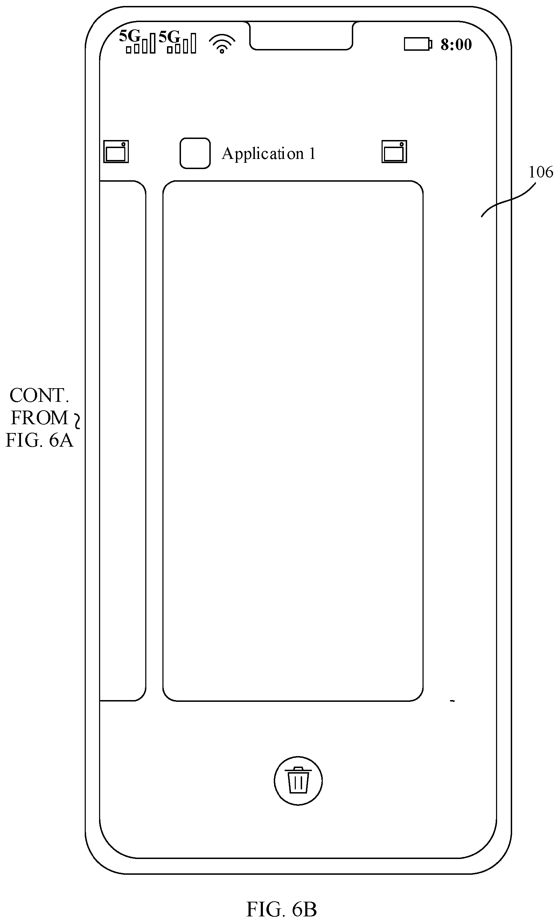

As an example, the animation effect scenario is a scenario in which the mobile phone switches from the main screen interface to a multi-task interface. For example, the mobile phone displays an interface 105 shown in FIG. 6A(1), and the interface 105 is the main screen interface of the mobile phone. Then, in response to an operation performed by the user on the main screen interface, the mobile phone displays an interface 106 shown in FIG. 6A(2), where the interface 106 is a multi-task interface of the mobile phone. The interface 106 includes an interface of an application 1 that runs in the background, and the application 1 is an application that runs in the background for shortest duration. In the animation effect scenario, the animation effect refers to a process from the user performing the operation on the main screen interface to the mobile phone displaying the multi-task interface.

It should be noted that, for the operation performed by the user on the main screen interface, reference may be made to example descriptions of the exit operation in the foregoing embodiment, and details are not described herein again. As an example, the operation is a slide operation. For example, as still shown in FIG. 6A(2), the operation may be, for example, a slide-upward operation performed by the user on the main screen interface.

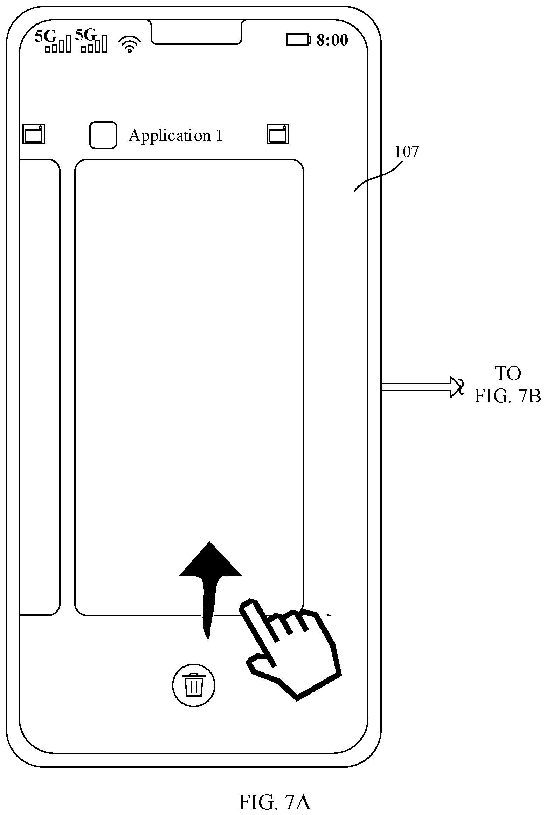

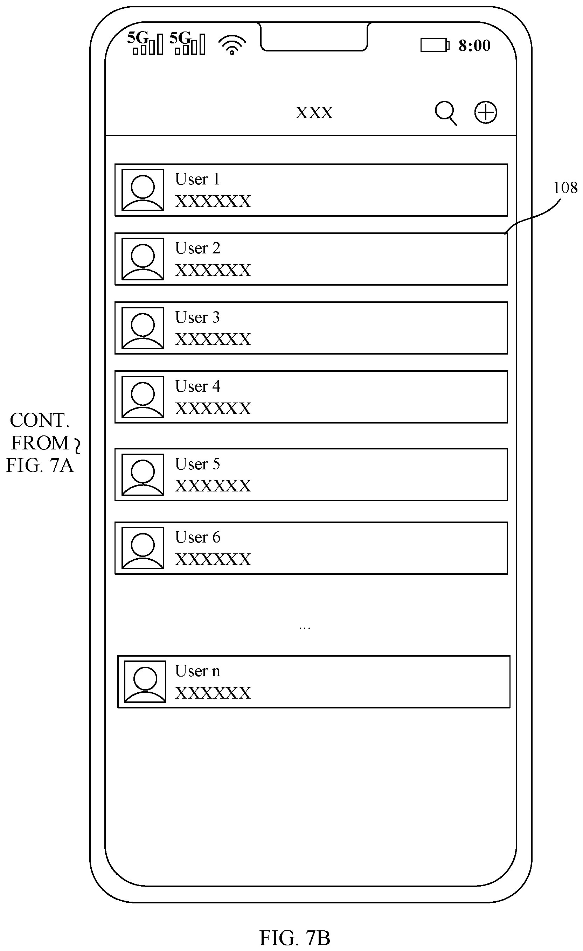

As an example, the animation effect scenario is a scenario in which the mobile phone starts the "messaging" application in the multi-task interface. For example, the mobile phone displays an interface 107 shown in FIG. 7A(1), and the interface 107 is a multi-task interface of the mobile phone. Then, the mobile phone displays, in response to an operation performed by the user on the interface 107, an interface 108 shown in FIG. 7A(2), where the interface 103 is an interface after the "messaging" application is started. In the animation effect scenario, the animation effect refers to a process from the user performing the operation on the interface 107 to the mobile phone displaying the interface 108.

It should be noted that, for the operation performed by the user on the interface 107, reference may be made to example descriptions of the starting operation in the foregoing embodiment, and details are not described herein again. As an example, the operation is a slide operation. For example, as still shown in FIG. 7A(2), the operation may be, for example, a tap operation.

The following shows a plurality of examples of determining rules for determining to perform composition prediction on the first frame according to this application, including one or more of the following:
**Determining rule 1: The first frame includes a layer whose requested composition manner is GPU composition.**

Under this determining rule, composition prediction is performed on the first frame only when the first frame includes a layer whose requested composition manner is GPU composition, which can increase a probability of performing composition prediction on the first frame, and save a composition time of the first frame, thereby avoiding picture stuttering of the electronic device, and improving user experience.

It may be understood that composition prediction refers to asynchronous execution of a GPU composition process (S305) and a composition strategy determining process (S306), so that the process of determining a composition strategy in the first frame by the electronic device does not affect the performing of the GPU composition by the electronic device. Therefore, a computing power of the electronic device can be fully exerted to be used for GPU composition, thereby reducing a composition time of the first frame, avoiding picture stuttering, and further improving user experience.

**Determining rule 2: The first frame includes a layer whose requested composition manner is GPU composition, and the second frame includes a layer whose requested composition manner is GPU composition.**

It may be understood that, because a change between two frames is generally not large, when a previous frame includes a layer whose requested composition manner is GPU composition, there is a high probability that a next frame also includes a layer whose requested composition manner is GPU composition. Therefore, when the "determining rule 2" is met, composition prediction may be performed on the first frame, which can increase a probability of performing composition prediction on the first frame, and save a composition time of the first frame, thereby avoiding picture stuttering of the electronic device and improving user experience.

**Determining rule 3: The first frame includes a layer whose requested composition manner is GPU composition, and the first frame belongs to an animation effect frame.**

It may be understood that, because an animation effect needs to display complex and diverse dynamic pictures, a composition process of an animation effect frame that forms an animation effect is more complex than a composition process of a common frame, and a composition manner requested by a layer of the animation effect frame generally includes GPU composition. Therefore, when the "determining rule 3" is met, composition prediction may be performed on the first frame, which can increase a probability of performing composition prediction on the first frame, and saving a composition time of the first frame, thereby avoiding picture stuttering of the electronic device and improving user experience.

Optionally, on the basis of the determining rule 3, it may be further determined whether the second frame includes a layer whose requested composition manner is GPU composition.

For example, on the basis of the determining rule 3, when the second frame does not include a layer whose requested composition manner is GPU composition, composition prediction is performed on the first frame. It may be understood that even if a previous frame (the second frame) of the first frame does not include a layer whose requested composition manner is GPU composition, because the first frame is an animation effect frame, the first frame may also include a plurality of layers whose requested composition manners are GPU composition. Therefore, in this case, composition prediction may be performed on one frame, which can increase a probability of performing composition prediction on the first frame, and save a composition time of the first frame, thereby avoiding picture stuttering of the electronic device, and improving user experience.

For example, on the basis of the determining rule 3, when the second frame includes a layer whose requested composition manner is GPU composition, composition prediction is performed on the first frame. It may be understood that, in this example, performing composition prediction on the first frame not only needs to ensure that the first frame is an animation effect frame, but also needs to ensure that a previous frame of the first frame includes a layer whose requested composition manner is GPU composition, which can avoid phenomena such as extra thread overhead and CPU load increase caused by performing composition prediction on the first frame due to improper determining.

**Determining rule 4: The first frame includes a layer whose requested composition manner is GPU composition, layer data of the first frame is the same as layer data of the second frame, and the second frame includes a layer whose requested composition manner is GPU composition.**

It may be understood that, the layer data of the first frame being the same as the layer data of the second frame indicates that the first frame is the same as the second frame. With reference to that the second frame includes a layer whose requested composition manner is GPU composition, it indicates that there is a high probability that the first frame also includes a layer whose requested composition manner is GPU composition. Therefore, when the "determining rule 4" is met, composition prediction may be performed on the first frame, which can increase a probability of performing composition prediction on the first frame, and save a composition time of the first frame, thereby avoiding picture stuttering of the electronic device and improving user experience.

**Determining rule 5: The first frame includes a layer whose requested composition manner is GPU composition, layer data of the first frame is different from layer data of the second frame, and the second frame includes a layer whose requested composition manner is GPU composition.**

It may be understood that, the layer data of the first frame being different from the layer data of the second frame indicates that the second frame has changed compared with the first frame.

With reference to that the second frame includes a layer whose requested composition manner is GPU composition, it may be understood that, when a previous frame of the first frame includes a layer whose requested composition manner is GPU composition, composition prediction is performed on the first frame even if the previous frame of the first frame is different from the first frame. In this implementation, a probability of performing composition prediction can be increased, thereby reducing a composition time of the first frame, avoiding picture stuttering, and further improving user experience.

**Determining rule 6: The first frame includes a layer whose requested composition manner is GPU composition, a composition manner of the first frame is the same as a composition manner of the second frame, and the second frame includes a layer whose requested composition manner is GPU composition.**

For example, in a process of compositing M first layers of the first frame, attributes of the first layers meet at least one of the plurality of preset attribute items, M being a positive integer. In a process of compositing N second layers of the second frame, attributes of the second layer meet at least one of the plurality of preset attribute items, N being a positive integer, and M being equal to N. For example, M=N=1, or M=N=2. In this example, the composition manner of the first frame is the same as the composition manner of the second frame. With reference to that the second frame includes a layer whose requested composition manner is GPU composition, it indicates that there is a high probability that the first frame also includes a layer whose requested composition manner is GPU composition. Therefore, when the "determining rule 6" is met, composition prediction may be performed on the first frame, which can increase a probability of performing composition prediction on the first frame, and save a composition time of the first frame, thereby avoiding picture stuttering of the electronic device and improving user experience.

**Determining rule 7: The first frame includes a layer whose requested composition manner is GPU composition, a composition manner of the first frame is different from a composition manner of the second frame, and the second frame includes a layer whose requested composition manner is GPU composition.**

For example, in a process of compositing M first layers of the first frame, attributes of the first layers meet at least one of the plurality of preset attribute items, M being a positive integer. In a process of compositing N second layers of the second frame, attributes of the second layer meet at least one of the plurality of preset attribute items, N being a positive integer, and M being equal to N. For example, M=N=1, or M=N=2. In this example, the composition manner of the first frame is different from the composition manner of the second frame. With reference to that the second frame includes a layer whose request composition manner is GPU composition, it may be understood that, when the previous frame of the first frame includes a layer whose request composition manner is GPU composition, composition prediction is performed on the first frame even if a quantity of the second layers in the second frame is not equal to a quantity of the first layers in the first frame. In this implementation, a probability of performing composition prediction can be increased, thereby reducing a composition time of the first frame, avoiding picture stuttering, and further improving user experience.

It may be understood that, in this application, a plurality of determining rules for determining to perform composition prediction on the first frame are provided. When the first frame meets any one of the foregoing determining rules, composition prediction may be performed on the first frame. Therefore, a probability of performing composition prediction on the first frame can be increased, thereby reducing a composition time of the first frame, avoiding picture stuttering, and further improving user experience.

It should be noted that, in a specific implementation, one or more of the foregoing determining rules may be selected to determine whether to perform composition prediction on the first frame. The foregoing seven determining rules may also be mutually combined, which is not limited in this application.

Next, the subsequent description proceeds on the assumption that the first frame meets one or more of the foregoing determining rules and that composition prediction is performed on the first frame. An execution process of composition prediction includes S305, S306, and S307 shown in **FIG. 2****, which are successively described below.**

**S305: The image rendering library performs GPU composition on the M first layers to generate a first target layer.**

**S306: The asynchronous composer determines a composition manner requested by a layer in the first frame other than the M first layers.**

It should be noted that, S305 and S306 are asynchronously performed. That is, content shown in S305 and S306 is run by using two threads. Specifically, a start moment and an end moment for S305 and S306 are not limited in this application. In a possible implementation, a moment at which S305 and S306 are run simultaneously exists in the electronic device. For example, when it is determined that composition prediction is to be performed on the first frame, the electronic device runs content in S305 by using a first process, and runs content in S306 by using a second process, that is, the process of compositing the M first layers by the GPU and the process of determining a composition manner requested by a layer in the first frame do not affect each other, so that a computing power of the GPU can be made full use of to composite the M first layers, thereby reducing a composition time of the first frame, avoiding picture stuttering, and further improving user experience.

The image rendering library performs GPU composition on the M first layers to generate the first target layer. The first target layer is a layer obtained by compositing the M first layers by the GPU. For example, M is equal to 1, and the GPU composites one first layer to obtain one layer. For another example, M is equal to 3, and the GPU composites three first layers to obtain one layer. The GPU composites the M first layers, so that the first target layer obtained by GPU composition can generate a final image by using the hardware composer, and the image is displayed on the display screen of the electronic device.

In a possible implementation, the asynchronous composer may detect whether the first frame meets an asynchronous composition condition.

In another possible implementation, the asynchronous composer may further obtain a composition manner fed back by the hardware composer, and determine a composition manner requested by a layer other than the M first layers in the first frame. For example, the asynchronous composer determines, based on the composition manner fed back by the hardware composer, L layers (referred to as third layers) whose requested composition manners are GPU composition in the first frame, where L is a positive integer, for example, L is 1, 2, or 3. Then, the asynchronous composer may transfer the L third layers in the first frame to the layer rendering library, so that the layer rendering library performs GPU composition on the L third layers, and generates a second target layer (S307).

Optionally, L may alternatively be 0. That is, the asynchronous composer determines zero third layers based on the composition manner fed back by the hardware composer. In this case, S307 does not need to be performed.

**S307: The image rendering library performs GPU composition on the L third layers to generate a second target layer. For details, refer to related descriptions in S305. Details are not described herein again.**

It should be noted that, a thread used by the image rendering library to perform GPU composition on the L third layers and a thread used by the image rendering library to perform GPU composition on the M first layers may be a same thread. That is, the thread used to instruct the GPU to composite the layers successively performs GPU composition on the M first layers and the L third layers. In addition, when L is 0, the second target layer is not generated. Therefore, when L is 0, the second target layer may be understood as not existent or an empty layer.

When the image rendering library obtains the first target layer and the second target layer by composition, the first target layer and the second target layer may be transferred to the image composition library, and the image composition library then packages and transfers the first target layer, the second target layer, and the requested composition manner to the hardware composer as layers of the hardware composer.

**S308: The hardware composer performs final composition on the first frame and sends to a display unit.**

A layer that cannot be processed by the hardware composer has been processed into a layer that can be processed by the hardware composer in a GPU composition manner. Therefore, the hardware composer may composite the plurality of layers sent by the image composition library. For example, the hardware composer may invoke a display driver (display driver) to composite the plurality of layers sent by the image composition library. Optionally, the display driver may further send a composited final picture to the display screen for display.

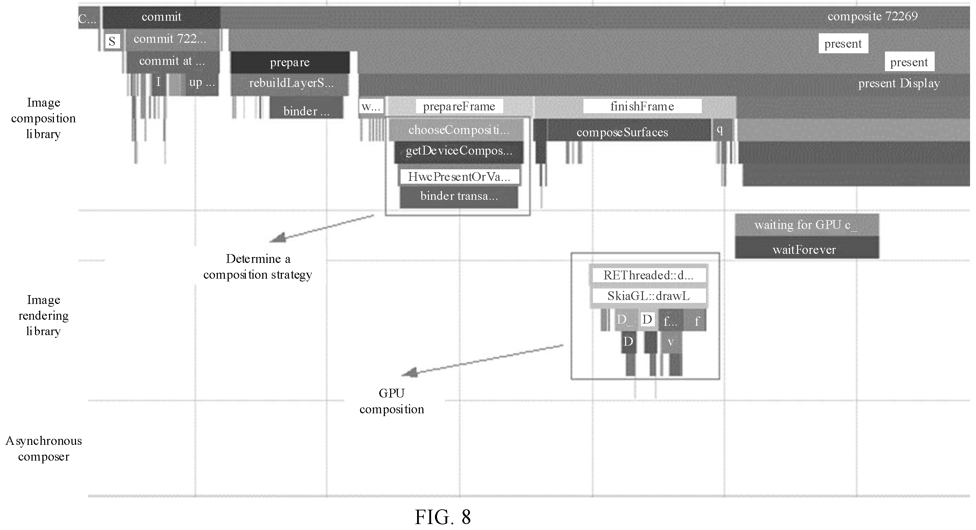

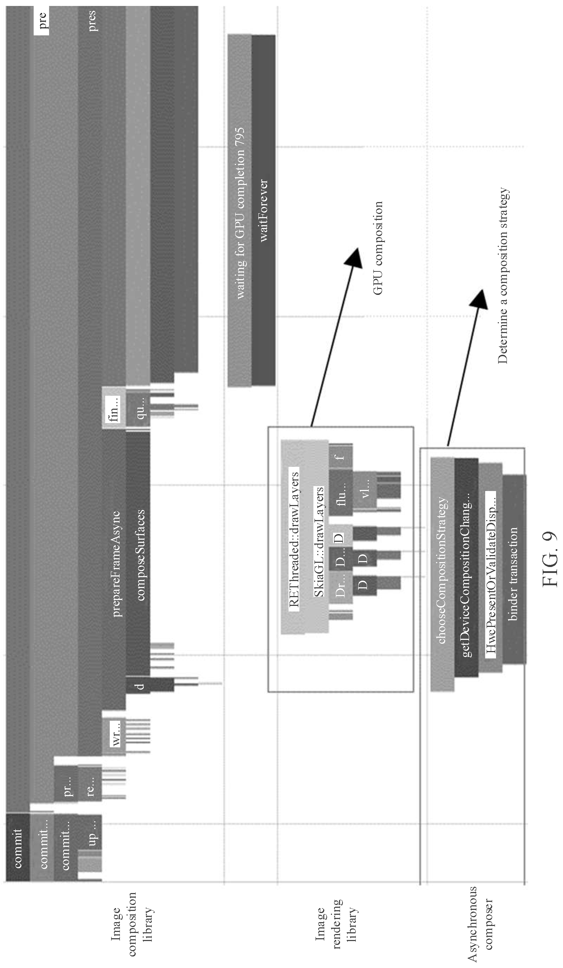

To further display beneficial effects generated by performing composition prediction, refer to FIG. 8 and FIG. 9, where FIG. 8 is used to show a case in which composition prediction is not performed, and FIG. 9 is used to show a case in which composition prediction is performed. It should be noted that, each row in FIG. 8 and FIG. 9 may be represented as one process, and an execution sequence of the processes is: determining from left to right before determining from top to bottom. FIG. 9 is used as an example. An execution sequence of functions in FIG. 9 may be prepareFrameAsync, choosecompositionstrategy, REThreaded::drawLayers, and the like.

As shown in FIG. 8, a trace that does not perform composition prediction includes: The image composer first determines a composition manner requested by a layer in a frame, and then the image rendering library invokes GPU composition to perform GPU composition on the layer whose requested composition manner is GPU composition. Then, the hardware composer performs final layer composition, and sends the final picture to the display screen for display.

As shown in FIG. 9, a trace that performs composition prediction includes: The asynchronous composer and the image rendering library perform asynchronous execution. That is, when the asynchronous composer determines a composition manner requested by a layer in a frame, the image rendering library also performs an operation of performing GPU composition on the layer. Therefore, the image rendering library does not need to wait for determining the composition manner requested by the layer in the frame, so that performing GPU composition on the layer and determining the composition manner requested by the layer in the frame are synchronously performed, thereby saving a composition time of the layer, reducing picture stuttering, and further improving user experience.

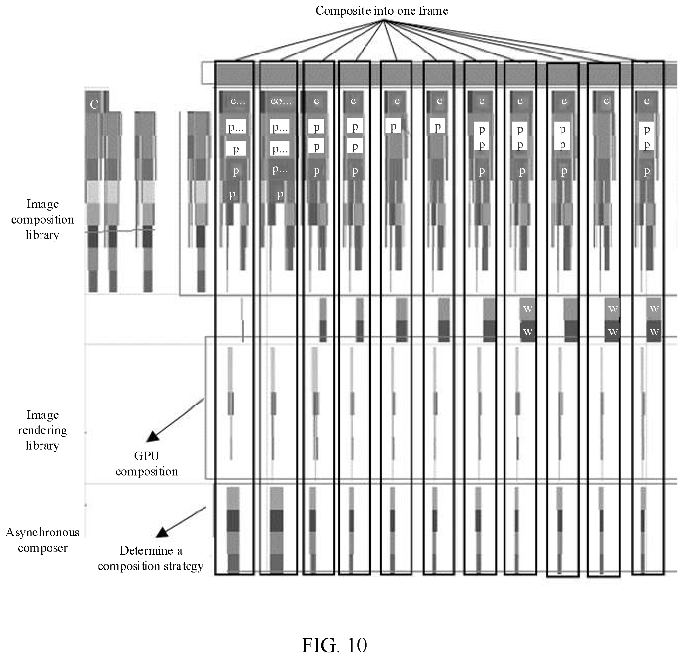

Referring to FIG. 10, FIG. 10 is a schematic diagram of a workflow of software in a user interface switching process according to an embodiment of this application, and is used to show the workflow of the software in the user interface switching process when using the frame composition method provided in this application. With reference to the trace that is shown in FIG. 9 and that is used to perform composition prediction, it may be learned that, in the user interface switching process shown in FIG. 10, it is determined to perform composition prediction on each frame. It can be learned that, according to the frame composition method provided in this application, a probability of determining to perform composition prediction on a frame can be greatly increased, and the composition time of the layer can be saved, thereby reducing picture stuttering, and further improving user experience.

In conclusion, in this application, a composition prediction technology is used. By designing a plurality of determining rules for performing composition prediction on a frame, a probability of performing composition prediction on the frame can be increased, and the composition time of the layer can be saved, thereby reducing picture stuttering, and further improving user experience. In addition, in this application, the rendering manner being scaling is used as a condition for determining that the composition manner requested by the layer is GPU composition, and a probability of determining the composition manner requested by the layer as GPU composition may be increased. With reference to the prerequisite of determining to perform composition prediction on the frame is that the frame includes a layer whose requested composition manner is GPU composition, a probability of performing composition prediction on the frame is increased. The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. A frame composition method, wherein the method is applied to an electronic device, and the method comprises:
displaying, by a display screen of the electronic device, a first user interface; and
performing, by the electronic device, composition prediction on a first frame during switching of the electronic device from displaying the first user interface to displaying a second user interface in a process of compositing M first layers of the first frame if attributes of the first layers meet at least one of a plurality of preset attribute items, M being a positive integer, wherein
the plurality of preset attribute items comprise scaling.

2. The method according to claim 1, wherein the plurality of preset attribute items further comprise:
rounded corner, blur effect, special angle rotation, high dynamic range HDR lighting composition, and shadow effect.

3. The method according to claim 1 or 2, wherein the performing, by the electronic device, composition prediction on a first frame comprises:
performing, by the electronic device, composition prediction on the first frame when a second frame comprises a layer whose requested composition manner is GPU composition, the second frame being a previous frame of the first frame.

4. The method according to claim 1 or 2, wherein the performing, by the electronic device, composition prediction on a first frame comprises:
performing, by the electronic device, composition prediction on the first frame when the first frame belongs to an animation effect frame.

5. The method according to claim 4, wherein the animation effect frame comprises one or more of the following:
an image displayed in a process in which the electronic device starts a target application;
or
an image displayed in a process in which the electronic device exits the target application;
or
an image displayed in a process in which the electronic device enters a multi-task interface;
or
an image displayed in a process in which the electronic device enters a target application from a multi-task interface.

6. The method according to claim 4 or 5, wherein the electronic device displays the animation effect frame on the display screen during switching from displaying the first user interface to displaying the second user interface.

7. The method according to any one of claims 4 to 6, wherein the performing, by the electronic device, composition prediction on a first frame further comprises:
performing, by the electronic device, composition prediction on the first frame when a second frame does not comprise a layer whose requested composition manner is GPU composition, the second frame being a previous frame of the first frame.

8. The method according to any one of claims 1 to 7, wherein layer data of the first frame is the same as layer data of the second frame; or layer data of the first frame is different from layer data of the second frame; and the second frame is a previous frame of the first frame.

9. The method according to any one of claims 1 to 8, wherein a composition manner of the first frame is the same as a composition manner of the second frame; or a composition manner of the first frame is different from a composition manner of the second frame; and the second frame is a previous frame of the first frame.

10. An electronic device, wherein the electronic device comprises a display screen, a memory, and a processor coupled to the memory; the display screen is configured to display an interface; and the memory stores a computer program, and when the processor executes the computer program, the electronic device is enabled to implement the method according to any one of claims 1 to 9.

11. A computer-readable storage medium, comprising computer instructions, wherein when the computer instructions are run on an electronic device, the electronic device is enabled to perform the method according to any one of claims 1 to 9.
